**Europäisches Patentamt**

**European Patent Office**

**Office européen des brevets**

(11) Numéro de publication : **0 354 837 B1**

## (12) FASCICULE DE BREVET EUROPEEN

(45) Date de publication du fascicule du brevet :
**15.07.92 Bulletin 92/29**

(51) Int. Cl.$^5$ : **B64G 1/44,** B64G 9/00, E05D 1/00, B25J 17/02

(21) Numéro de dépôt : **89402227.6**

(22) Date de dépôt : **07.08.89**

(54) **Articulation auto-motorisée, sans frottement, et ensemble articulé tel qu'un panneau solaire de satellite équipé de telles articulations.**

(30) Priorité : **08.08.88 FR 8810695**

(43) Date de publication de la demande :
**14.02.90 Bulletin 90/07**

(45) Mention de la délivrance du brevet :
**15.07.92 Bulletin 92/29**

(84) Etats contractants désignés :
**DE ES GB IT NL SE**

(56) Documents cités :
**WO-A-83/02795**
**FR-A- 2 367 578**
**GB-A- 2 189 290**
**US-A- 3 386 128**
**US-A- 3 945 053**

(73) Titulaire : **AEROSPATIALE Société Nationale Industrielle**
**37, Boulevard de Montmorency**
**F-75781 Paris Cédex 16 (FR)**

(72) Inventeur : **Auternaud, Jacques**
**1238 Avenue Notre Dame de Vie**
**F-06250 Mougins (FR)**

Inventeur : **Bartevian, Jean**
**50 Bld du Soleil**
**F-06150 Cannes La Bocca (FR)**
Inventeur : **Bertheux, Philippe**
**Chemin des Gabriels**
**F-83600 Les Adrets (FR)**
Inventeur : **Blanc, Eric**
**3 Rue Colonel Mattéi**
**F-06110 Le Cannet (FR)**
Inventeur : **De Mollerat Du Jeu, Thierry**
**Les Deux Rives**
**F-06270 Villeneuve Loubet (FR)**
Inventeur : **Foucras, Jean**
**1789 Chemin des Cabrières**
**F-06250 Mougins (FR)**
Inventeur : **Louis, Michel**
**19 Ave.Sainte Marguerite**
**F-06200 Nice (FR)**
Inventeur : **Marello, Georges**
**520 Rue Janvier Passero**
**F-06210 Mandelieu (FR)**
Inventeur : **Poveda, Pierre**
**29 rue de Konigsten**
**F-06110 Le Cannet Rocheville (FR)**
Inventeur : **Roux, Christian**
**Les Prés Fleuris Bât.2**
**F-6210 Mandelieu (FR)**

(74) Mandataire : **Mongrédien, André et al**
**c/o SOCIETE DE PROTECTION DES INVENTIONS 25, rue de Ponthieu**
**F-75008 Paris (FR)**

EP 0 354 837 B1

## Description

L'invention concerne principalement une articulation sans frottement, conçue pour assurer à la fois le déploiement automatique des éléments qu'elle relie, ainsi que le verrouillage de ces éléments en position déployée. L'invention concerne également un ensemble articulé constitué de différents éléments reliés entre eux par de telles articulations.

En raison de sa fiabilité et de ses performances, l'articulation selon l'invention est particulièrement adaptée pour être utilisée dans le domaine spatial, et notamment dans la fabrication des panneaux solaires des satellites, qui sont formés de différents éléments articulés entre eux et dont le déploiement intervient dans l'espace. De nombreuses autres applications peuvent toutefois être envisagées, aussi bien dans le domaine spatial que sur terre. Dans la première catérogie, on citera simplement à titre d'exemples, les volets mobiles, les bras de manipulateurs, etc.. Parmi les applications terrestres, on citera la robotique et les industries nucléaire, alimentaire, pharmaceutique, chimique, etc..

Actuellement, les différents éléments constituant les panneaux solaires articulés sont généralement reliés entre eux par des articulations du type charnières, qui se caractérisent par l'existence de frottements entre les pièces en contact. De telles articulations nécessitent une lubrification très difficile à obtenir compte tenu des conditions extrêmes de température et de vide auxquelles est soumis le satellite lors de son lancement, puis dans l'espace après sa mise sur orbite. Dans ces conditions, les matériaux ont tendance à se souder naturellement ou à gripper, ce qui risque de conduire au non déploiement du panneau.

Par ailleurs, ces articulations actuelles assurent généralement le déploiement des panneaux au moyen d'une motorisation comprenant par exemple des ressorts de torsion. Les frottements importants et dispersés de ces articulations imposent d'avoir une motorisation importante, pour obtenir une marge de motorisation suffisante. Dans le cas où les frottements seraient faibles, les chocs en fin de déploiement peuvent donc être importants. Pour limiter ces chocs, qui entraîneraient un impact structural important, on adjoint à ces articulations actuelles un système de régulation de vitesse. De plus, les frottements importants et dispersés ont pour conséquence que la géométrie de déploiement ne peut pas être prédite avec précision, de sorte qu'on est amené à synchroniser le déploiement des différents éléments constituant les panneaux, comme l'illustre notamment le document FR-A-2 371 343.

Dans le document US-A-3 386 128, on a envisagé de relier deux éléments articulés au moyen de plusieurs lames élastiques à section en arc de cercle, fixées sur les deux faces opposées de ces éléments.

On réalise ainsi une articulation sans frottement, appliquant entre les éléments un couple moteur qui tend à les déployer automatiquement, et exerçant un effort de verrouillage entre ces éléments lorsqu'ils se trouvent en position déployée.

Cependant, cette articulation n'assure aucun guidage relatif entre les éléments lorsqu'ils se déploient, de sorte que des mouvements parasites tels que des mouvements de torsion ou d'oscillation peuvent se produire, par exemple lors du lancement du satellite, lors du déploiement du panneau ou sous l'effet des gradients thermiques auxquels ce dernier est soumis. De tels mouvements ne sont pas acceptables en pratique, car ils peuvent conduire à endommager les panneaux eux- mêmes ou d'autres parties du satellite.

De plus, les lames élastiques décrites dans le document US-A-3 386 128 sont nécessairement d'épaisseur limitée, pour garantir une bonne élasticité pendant toute la phase de déploiement. L'obtention d'un couple moteur élevé et d'une force de verrouillage satisfaisante nécessite donc de prévoir un nombre de lames important, ce qui conduit à accroître exagérément l'encombrement de l'articulation.

D'autre part, on connaît du document FR-A-2 122 087 une charnière dans laquelle les deux éléments articulés adjacents sont en contact l'un avec l'autre par des surfaces cylindriques convexes. Ces deux éléments sont reliés par au moins deux rubans flexibles dont les extrémités sont fixées sur chacun des éléments, de telle sorte que les rubans se croisent entre les surfaces cylindriques.

Une telle charnière, elle aussi sans frottement, ne comporte ni moyen de motorisation, ni moyen de verrouillage en position d'ouverture. De plus, elle n'est pas adaptée aux applications précitées, car les gradients thermiques importants auxquels elle serait alors soumise, conduiraient inévitablement à l'apparition d'un jeu entre les éléments, ayant pour conséquence des effets de torsion indésirables entre les panneaux, en raison notamment des efforts supportés lors du lancement du satellite et à la fin du déploiement des éléments articulés.

L'invention a précisément pour objet une articulation sans frottement d'un type nouveau, présentant à la fois les avantages des articulations décrites dans les documents US-A-3 386 128 et FR-A-2 122 087, sans en comporter les inconvénients, cette articulation ayant notamment pour avantages d'être auto-motorisée et auto-verrouillable, tout en bénéficiant d'un guidage sans jeu et sans mouvement de torsion entre les éléments, quelles que soient les conditions de température et les chocs mécaniques auxquels elle est soumise.

Selon l'invention, ce résultat est obtenu au moyen d'une articulation sans frottement, conçue pour être montée entre deux éléments voisins, comprenant au moins une bande élastique préformée, à section en arc de cercle, solidaire de chacun des éléments par ses deux extrémités, cette articulation étant caractérisée par le fait qu'elle comprend deux ferrures aptes à être solidarisées de chacun des éléments et sur lesquelles sont fixées les extrémités de chaque bande élastique, lesdites ferrures comportant des surfaces cylindriques convexes aptes à rouler l'une sur l'autre, sous l'action d'au moins deux organes souples, les extrémités de chacun de ces organes étant fixées respectivement sur chacune des ferrures, de telle sorte que ces organes passent en se croisant entre lesdites surfaces cylindriques, un moyen de mise en tension étant prévu pour exercer une précontrainte de traction sur chacun desdits organes.

Dans une articulation ainsi conçue, les deux ferrures roulent l'une sur l'autre sans frottement, sous l'action des bandes élastiques qui assurent également le verrouillage de l'articulation déployée. Le roulement s'effectue sans jeu et sans mouvement de torsion entre les panneaux, grâce aux organes souples et précontraints reliant les deux ferrures, cette précontrainte étant déterminée de façon à faire supporter par lesdits organes les charges de toute nature et les gradients thermiques auxquels est soumise l'articulation dans l'application envisagée.

En plus de ces qualités, l'articulation selon l'invention présente l'avantage, étant donné l'absence de frottement, que la motorisation résiduelle (couple moteur moins couple résistant) est peu dispersée. Par conséquent, la géométrie de déploiement peut être prédite avec une grande précision. Il n'est donc généralement pas nécessaire de lui adjoindre un système de synchronisation du déploiement des différents panneaux entre eux. En outre, l'absence de frottement permet d'utiliser une motorisation relativement faible et, par conséquent, de limiter les chocs en fin de déploiement. Il n'est donc pas nécessaire d'adjoindre un système de régulation de vitesse à l'articulation.

Avantageusement, chaque bande élastique comprend deux lames élastiques superposées, solidarisées entre elles en leur milieu par un moyen de liaison mécanique tel qu'un rivet.

Afin de trouver le meilleur compromis possible entre le couple moteur et la force de verrouillage en fin de déploiement, chaque bande élastique est de préférence, disposée à une distance non nulle d'un plan passant par les axes des surfaces cylindriques, parallèlement à ce plan et du côté tourné vers l'intérieur de l'articulation, une face concave de ladite bande élastique étant tournée vers ce plan.

Dans un mode de réalisation préféré de l'invention, la mise en tension de chacun des organes souples, constitué par exemple par une lame, est assurée en fixant une extrémité de cet organe sur l'une des ferrures par l'intermédiaire d'une poutre fléchissante. Pour éviter la déformation plastique de cette poutre, une cale peut être interposée entre son extrémité liée audit organe et une face voisine de la ferrure.

De préférence, au moins une bande élastique est fixée sur au moins l'un des côtés des ferrures, par l'intermédiaire de pièces d'ancrage montées sur les faces opposées des ferrures.

Dans de nombreux cas, l'articulation ainsi agencée fonctionne de façon satisfaisante. Toutefois, lorsque l'articulation est déployée, sa rigidité dans le sens de la fermeture (avant toute flexion des bandes élastiques) est insuffisante dans certaines applications, compte tenu des efforts appliqués sur cette articulation. Les ferrures tendent alors à décoller l'une de l'autre.

Trois variantes de réalisations différentes de l'articulation selon l'invention permettent de résoudre ce problème.

Selon une première variante, on assure la rigidité de l'assemblage déployé au moyen d'au moins un organe de liaison, de préférence précontraint, tel qu'un câble fixé sur les ferrures, de préférence par l'intermédiaire des pièces d'ancrage des bandes élastiques, de façon à plaquer l'une contre l'autre les surfaces cylindriques. Cet organe de liaison est alors disposé approximativement dans un plan passant par les axes de ces surfaces.

Selon une deuxième variante, qui assure la rigidité de l'assemblage sans empêcher le décollement des ferrures, des organes d'accrochage complémentaires comprenant par exemple un crochet relié à l'une des ferrures par une lame de ressort et un pion solidaire de l'autre ferrure, viennent s'emboîter l'un dans l'autre à la fin du déploiement de l'articulation.

Enfin, dans la troisième variante, les organes souples sont montés dans des gorges formées dans les surfaces cylindriques et de profondeur supérieure à l'épaisseur de ces organes, de sorte que les surfaces cylindriques sont directement en contact entre elles de part et d'autre des gorges. Cette variante, particulièrement avantageuse puisqu'elle ne requiert aucun organe supplémentaire dans l'articulation, assure elle aussi la rigidité de l'assemblage sans empêcher le décollement des ferrures.

Comme on l'a vu, l'articulation selon l'invention ne nécessite pas, en principe, de système permettant de synchroniser le déploiement des éléments entre eux. Une telle synchronisation peut toutefois être utile, dans certaines applications particulières.

Dans ce cas, un ensemble articulé formé d'au moins trois éléments voisins articulés deux à deux par au moins une articulation selon l'invention est caractérisé par le fait qu'il comprend de plus un mécanisme de déploiement synchronisé comportant, entre chaque paire d'éléments voisins, un support articulé sur ces éléments par des axes confondus avec les axes des surfaces cylindriques de l'articulation reliant ces éléments et, pour chaque élément situé entre deux articulations, une paire d'organes de traction articulés sur les supports de part et d'autre de leurs axes d'articulation sur cet élément, de façon à former des parallélogrammes déformables avec ces supports.

Différentes variantes de réalisation d'une articulation conforme à l'invention et d'un ensemble articulé équipé de telles articulations vont à présent être décrites, à titre d'exemples non limitatifs, en se référant aux dessins annexés dans lesquels :

– la figure 1 est une vue en perspective représentant l'intérieur d'une articulation conforme à l'invention, dans sa position déployée ;

– la figure 2 est une vue en plan de l'articulation de la figure 1, en position déployée et vue du côté intérieur ;

– les figures 3a, 3b et 3c sont des vues en coupe transversale de l'articulation des figures 1 et 2, respectivement en position repliée, en cours de déploiement et en position déployée ;

– la figure 4 est une vue en plan représentant à plus grande échelle la fixation d'une bande élastique et d'un câble précontraint sur les ferrures de l'articulation ;

– la figure 5 est une vue en coupe partielle selon la ligne V-V de la figure 4 ;

– la figure 6 est une vue de côté illustrant une variante de réalisation de l'articulation des figures 1 à 5 ;

– la figure 7 est une vue en plan représentant la partie centrale d'une articulation, en position déployée et vue du côté intérieur, selon une autre variante de réalisation de l'invention ;

– la figure 8 est une vue en coupe transversale de l'articulation de la figure 7, en position déployée et ;

– les figures 9 à 11 sont des vues de côté représentant schématiquement une partie d'un ensemble articulé formé d'éléments reliés par des articulations selon l'invention, cet ensemble étant équipé d'un mécanisme de déploiement synchronisé et représenté successivement en position repliée, en cours d'ouverture et en position déployée.

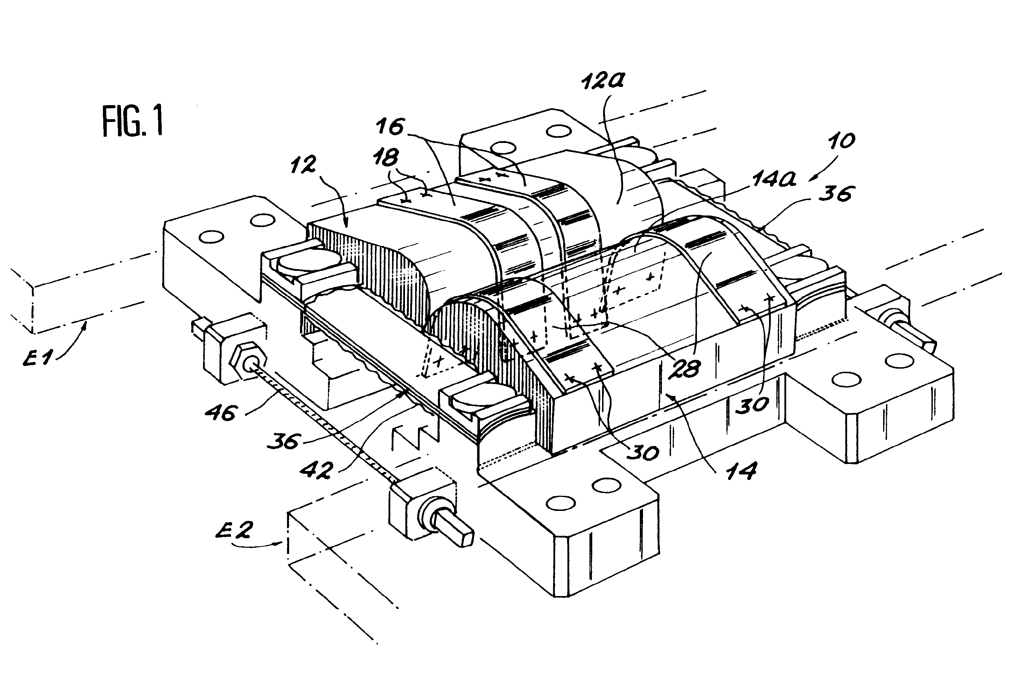

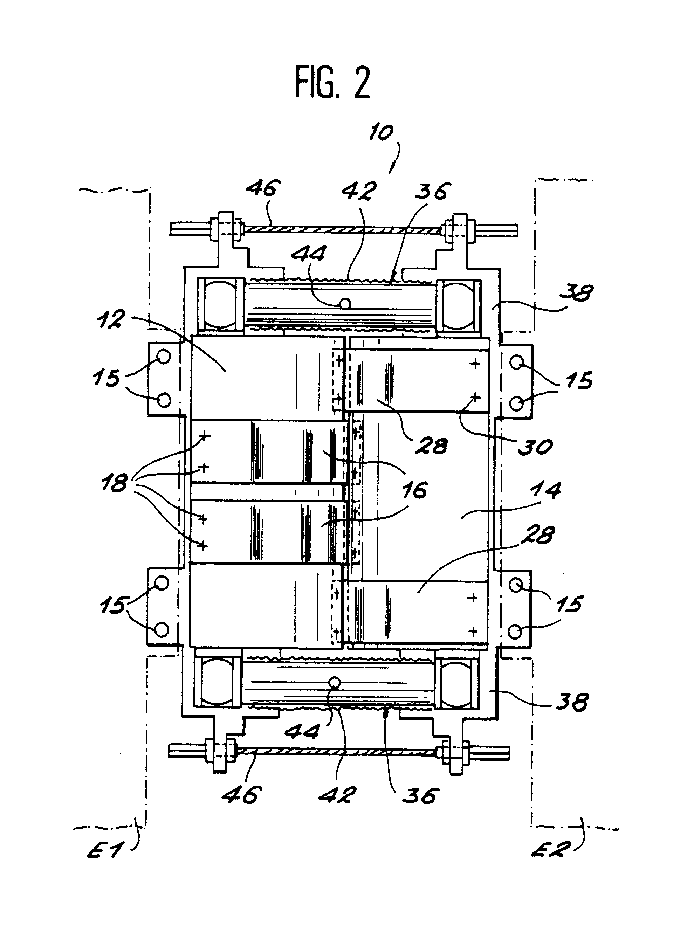

Comme l'illustrent notamment les figures 1 à 3, l'articulation selon l'invention, désignée de façon générale par la référence 10, comporte deux ferrures 12 et 14 constituées par exemple par des blocs métalliques usinés. Ces ferrures 12 et 14 sont éventuellement allégées par des évidements lorsque l'application le justifie, comme c'est notamment le cas dans le domaine spatial. Chacune des ferrures 12 et 14 est prévue pour être fixée sur un élément correspondant E1, E2 par tout moyen approprié tel que des vis ou des rivets 15 (figure 2).

Les ferrures 12 et 14 comportent chacune une surface cylindrique 12a, 14a présentant en section la forme d'un arc de cercle dont la longueur est légèrement supérieure à 90° dans l'exemple représenté. Les rayons des surfaces cylindriques 12a et 14a sont égaux. Ainsi, ces surfaces 12a et 14a sont aptes à rouler l'une sur l'autre pour permettre aux éléments E1 et E2 de se déplacer entre deux positions extrèmes décalées de 90° l'une par rapport à l'autre. Lorsque les éléments E1 et E2 sont des éléments plans, la première de ces positions, dite position repliée, correspond au cas où les éléments E1 et E2 sont repliés l'un contre l'autre et parallèles entre eux, alors que la deuxième position, dite position déployée, correspondant au cas où ces éléments sont ouverts et disposés dans le même plan.

Afin de guider en permanence les surfaces cylindriques 12a et 14a des ferrures lors de leur roulement l'une contre l'autre, l'articulation 10 comprend de plus des organes souples dont les extrémités sont fixées sur chacune des ferrures de façon à rouler sur les surfaces 12a et 14a.

Dans l'exemple de réalisation représenté sur les figures, ces organes se présentent sous la forme de quatre lames métalliques flexibles 16 et 28, réalisées par exemple en acier inoxydable, que l'on appelle lames d'enroulement ou lames de conduite car elles permettent d'assurer le guidage du mouvement de roulement entre les surfaces 12a et 14a.

A titre d'exemple, l'assemblage 10 comprend deux lames d'enroulement centrales adjacentes 16, disposées dans la partie centrale des ferrures 12 et 14, et enroulées dans le même sens sur les surfaces cylindriques 12a et 14a, de part et d'autre d'un plan médian commun à ces ferrures. Une première extrémité de chacune des lames d'enroulement 16 est fixée directement sur une surface plane de la ferrure 12 prolongeant la surface cylindrique 12a tangentiellement à celle-ci. Cette fixation est assurée par exemple par des vis 18. A partir de cette extrémité, les lames 16 passent entre les surfaces cylindriques 12a et 14a des ferrures de façon à être successivement en contact avec la surface 12a, puis avec la surface 14a. Un mouvement de l'articulation dans le sens du déploiement a donc pour effet de dérouler une certaine longueur des lames 16 de la surface 14a et d'enrouler cette même longueur des lames 16 sur la surface 12a.

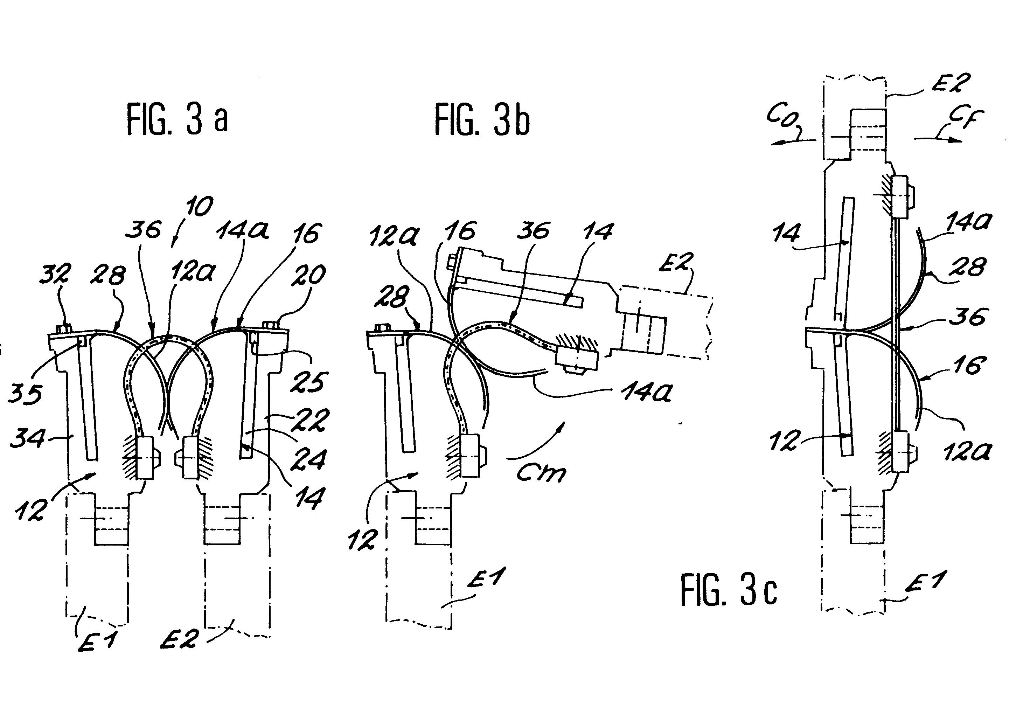

Comme l'illustre plus précisément la figure 3a, l'extrémité opposée de chacune des lames d'enroulement 16 est fixée par des vis 20 à une extrémité d'une poutre de flexion 22 dont l'autre extrémité est solidaire de la ferrure 14. Dans l'exemple représenté, la poutre 22 est réalisée d'une seule pièce avec la ferrure 14. La poutre 22 est alors obtenue en usinant une fente 24 dans la masse de la ferrure 14, à l'extrémité de la surface cylindrique 14a et selon une direction radiale par rapport à cette surface.

Lors du montage, on exerce sur l'extrémité de la poutre 22 sur laquelle doit être fixée la lame d'enroulement 16 une force conduisant à une déformation élastique de la poutre vers la ferrure 14. Cette force est maintenue jusqu'à la fixation complète de la lame 16 sur la poutre 22 au moyen des vis 20. Elle est ensuite relâchée, ce qui a pour effet d'appliquer sur la lame 16 une précontrainte de traction dont la valeur peut être connue avec précision en fonction de la flèche mesurée sur la poutre 22.

Dans certaines applications, notamment dans le domaine spatial, la poutre 22 est soumise à des charges qui risquent de la déformer au-delà de sa limite élastique, ce qui aurait alors pour effet de supprimer ou de réduire la précontrainte appliquée par cette poutre sur la lame d'enroulement 16 correspondante. Pour éviter cela, une cale 25 (figure 3a) est de préférence placée dans la fente 24, entre l'extrémité de la poutre 22 sur laquelle est fixée la lame 16 et la surface en vis-à-vis de la ferrure 14. Cette cale 25 laisse cependant subsister un jeu suffisant pour que la précontrainte reste appliquée sur la lame.

Dans le mode de réalisation représenté sur les figures 1 à 3, l'articulation 10 comprend deux autres lames d'enroulement ou de conduite extérieures 28 qui sont fixées sur les parties extérieures des ferrures 12 et 14, à proximité de chacune des lames 16, de façon également symétrique par rapport au plan médian des ferrures. Ces lames d'enroulement 28 sont enroulées en sens inverse des lames 16 sur les ferrures, de telle sorte que les lames 16 et 28 se croisent entre les surfaces cylindriques 12a et 14a. Le montage des lames d'enroulement 28 sur les ferrures, par ailleurs semblable à celui des lames 16, est donc inversé par rapport à ces dernières.

A titre d'exemple, une extrémité de chacune des lames 28 est fixée directement par des vis 30 sur une surface extérieure plane de la ferrure 14 prolongeant la surface cylindrique 14a tangentiellement à celle-ci. L'autre extrémité de chacune des lames d'enroulement 28 est fixée par des vis 32 sur une première extrémité d'une poutre de flexion 34 dont l'autre extrémité est solidaire de la ferrure 12 et, de préférence, réalisée d'un seul tenant avec cette dernière (figure 3a). Une précontrainte de traction est appliquée au montage sur chacune des lames d'enroulement 28 à l'aide des poutres 34, comme décrit précédemment pour les lames d'enroulement 16. Des cales 35 empêchent également toute déformation des poutres 34 au-delà de leur limite élastique.

L'ensemble formé par les ferrures 12 et 14 et par les lames d'enroulement 16 et 28 précontraintes en traction forme une articulation sans frottement. Les précontraintes emmagasinées dans chacune des lames d'enroulement (dont la valeur peut atteindre environ 800 N) permettent d'empêcher l'apparition d'un jeu radial ou de mouvements parasites tels que des mouvements de torsion entre les ferrures, notamment lors du déploiement, malgré les dilatations différentielles et les chocs auxquels peut être soumise l'articulation, en particulier lorsqu'elle est utilisée dans l'industrie spatiale.

Conformément à l'invention, l'articulation 10 comprend de plus des bandes élastiques préformées 36 qui ont à la fois pour fonction d'assurer le déploiement automatique de l'articulation et son verrouillage en position déployée. A cet effet, les extrémités de chacune des bandes élastiques 36 sont fixées sur les ferrures 12 et 14.

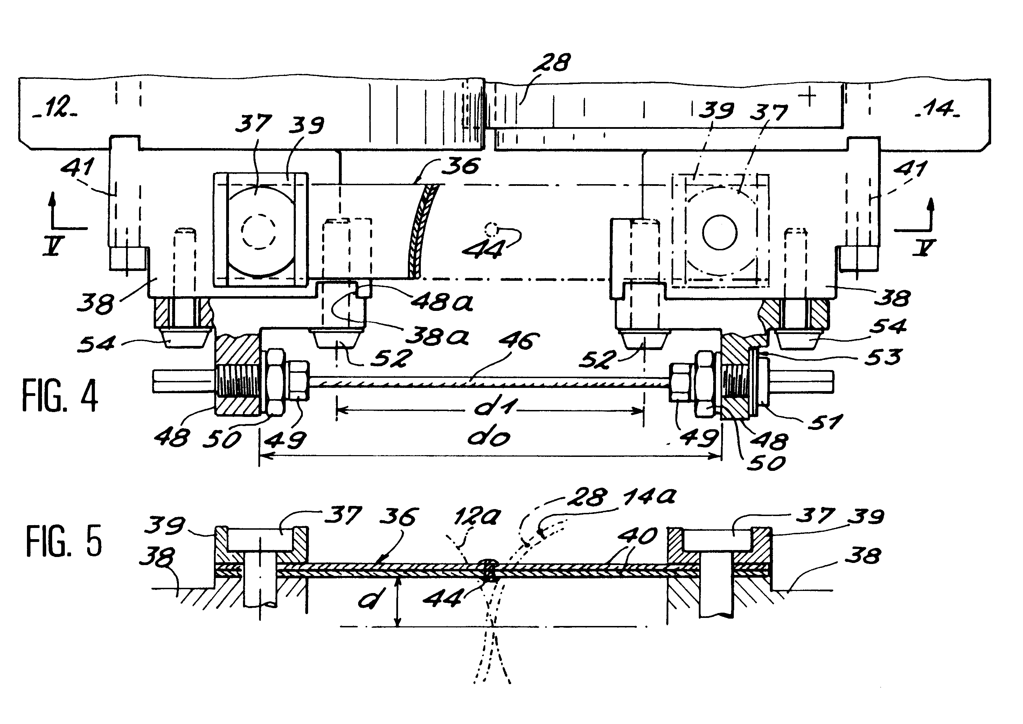

De façon plus précise, les extrémités de chacune des bandes élastiques 36 sont fixées sur des pièces d'ancrage 38, par exemple au moyen de vis 37 pressant les extrémités des bandes 36 entre une rondelle de maintien 39 et la pièce d'ancrage 38 (figures 4 et 5). Les pièces d'ancrage 38 sont elles-mêmes montées, par exemple par des moyens de fixation démontables tels que des vis 41, sur les faces latérales des ferrures 12 et 14. Dans le mode de réalisation représenté, une bande élastique 36 est ainsi montée de chaque côté des ferrures 12 et 14, comme le montrent les figure 1, 2 et 4.

Comme l'illustre en particulier la figure 5, chacune des bandes élastiques 36 est elle-même constituée par deux lames élastiques identiques superposées 40 présentant une section en arc de cercle. Au repos, ces lames élastiques occupent normalement une position rectiligne. Le joint 10 est alors en position déployée. La fixation des bandes élastiques 36 sur les pièces d'ancrage 38 est telle que, dans cette position, ces bandes sont écartées du plan passant par les axes des surfaces cylindriques 12a et 14a d'une distance $\underline{d}$ non nulle (figure 5) et que la concavité des lames est tournée vers ce plan. La valeur de la distance $\underline{d}$ est choisie en fonction de l'application envisagée, afin d'obtenir le meilleur compromis entre le couple moteur commandant le déploiement, le couple de déverrouillage déterminant l'efficacité du verrouillage, et la rigidité de l'articulation en position déployée. Par exemple, si le rayon des surfaces cylindriques 12a et 14a est de 22 mm, la distance $\underline{d}$ peut être d'environ 15 mm.

Avantageusement, chacune des bandes élastiques 36 est revêtue d'une enveloppe de protection 42 thermiquement isolante (figures 1 et 2), dans le cas où l'articulation est utilisée dans le domaine spatial. Cette protection permet d'éviter que le comportement des bandes élastiques soit modifié par les dilatations différentielles induites par les gradients thermiques élevés auxquels est soumise l'articulation dans cette application (la température de l'articulation pouvant varier entre environ 180°C et environ -120°C lorsque le satellite est sur orbite).

Comme l'illustre également la figure 5, les lames élastiques superposées 40 formant chacune des bandes élastiques 36 sont de préférence solidarisées en leur milieu par un rivet 44 ou par tout autre moyen de liaison mécanique ne modifiant pas le comportement de ces lames élastiques. Des essais ont montré qu'un tel rivet permettait de garantir une symétrie parfaite entre les deux moitiés des lames 40. Une évolution sans à-coup du couple moteur exercé par les lames

élastiques sur l'articulation est ainsi obtenue, conduisant à un déploiement sans à-coup de cette dernière, ce qui n'est pas toujours le cas en l'absence de rivet.

L'adjonction des bandes élastiques 36 à l'ensemble constitué par les ferrures 12 et 14 et par les lames d'enroulement 16 et 28 permet de réaliser une articulation sans frottement, auto-motorisée et assurant elle-même son verrouillage en position déployée. En particulier, il est important de noter que la réalisation de chacune des bandes élastiques 36 au moyen de deux lames élastiques 40 superposées permet, pour un encombrement donné, d'obtenir un couple moteur et un couple de déverrouillage supérieurs à ceux qui seraient obtenus avec une lame unique de plus forte épaisseur. En effet, des essais ont montré que le couple moteur obtenu à l'aide de deux lames élastiques superposées d'épaisseur donnée est supérieur au double du couple moteur obtenu à l'aide d'une seule lame élastique de même épaisseur, pendant toute la durée du déploiement, ce phénomène étant d'autant plus important que l'angle de déploiement de l'articulation est faible. Ces mêmes essais ont également montré que le phénomène est d'autant plus important que l'épaisseur des lames élastiques augmente. Il est donc particulièrement avantageux, lorsqu'on désire obtenir un couple moteur mieux réparti selon les angles de déploiement, d'utiliser au moins deux lames élastiques superposées, conformément à l'invention.

Différentes phases du déploiement d'une articulation 10 ainsi constituée sont illustrées sur les figures 3a à 3c.

La figure 3a représente l'articulation dans sa position initiale repliée. Le maintien dans cette position des éléments reliés par l'articulation est assuré par un moyen extérieur quelconque tel qu'un boulon explosif, qui ne fait pas partie de l'invention. Dans cette position, les lames 16 sont pratiquement enroulées en totalité sur la surface cylindrique 14a de la ferrure 14 alors que les lames 28 sont pratiquement enroulées en totalité sur la surface cylindrique 12a de la ferrure 12. Par ailleurs, les lames élastiques constituant les bandes 36 sont incurvées de façon à former une boucle.

Dès que le moyen de maintien précité est relâché, la contrainte emmagasinée dans les bandes élastiques 6 exerce sur les ferrures 12 et 14 un couple moteur Cm (figure 3b) qui a pour effet de faire rouler l'une sur l'autre les surfaces cylindriques 12a et 14a de ces ferrures. Les lames d'enroulement 16 s'enroulent ainsi progressivement sur la surface cylindrique 12a tout en se déroulant de la surface cylindrique 14a, alors que les lames d'enroulement 28 s'enroulent sur la surface cylindrique 14a tout en se déroulant de la surface cylindrique 12a. Cette situation est illustrée par la figure 3b.

La figure 3c représente la situation en fin de déploiement, dans laquelle les bandes élastiques 36 sont parfaitement rectilignes et assurent le verrouillage de l'articulation dans cette position. Les lames d'enroulement 16 sont alors enroulées pratiquement en totalité sur la surface cylindrique 12a, alors que les lames d'enroulement 28 sont enroulées pratiquement en totalité sur la surface cylindrique 14a.

Tout au long du déploiement, il est important de noter que les lames d'enroulement 16 et 28, précontraintes en traction, assurent un guidage précis et sans frottement du roulement des ferrures l'une sur l'autre, sans qu'un jeu radial ou un mouvement parasite quelconque tel qu'un mouvement de torsion puisse se produire entre ces ferrures. La motorisation de l'articulation peut donc être relativement faible, ce qui n'est pas le cas des articulations existantes utilisées notamment dans le domaine spatial. Il est donc possible de s'astreindre de tout système de régulation de la vitesse de déploiement, permettant habituellement de limiter les chocs en fin de déploiement des différents éléments d'un ensemble articulé tel qu'un panneau solaire de satellite.

Lorsque l'articulation 10 selon l'invention est en position déployée, sa rigidité présente des caractéristiques différentes selon qu'elle est soumise à un couple appliqué dans le sens de son ouverture ou de sa fermeture.

Ainsi, lorsque l'articulation déployée est soumise à un couple agissant dans le sens de l'ouverture (flèche $C_o$ sur la figure 3c), l'agencement relatif entre les bandes élastiques 36 et les ferrures 12 et 14 fait que ces dernières tendent à s'appliquer l'une contre l'autre alors que les bandes sont soumises à un effort de traction. La rigidité de l'articulation est alors suffisamment élevée pour être satisfaisante dans toutes les applications envisagées.

Au contraire, lorsque l'articulation déployée est soumise à un couple appliqué dans le sens de la fermeture (flèche $C_f$ sur la figure 3c), les bandes élastiques 36 travaillent dans le sens de la compression et un effort de traction est appliqué dans les lames d'enroulement 16 et 28. La rigidité de l'articulation est alors sensiblement inférieure à la rigidité qu'elle présente lorsqu'elle est soumise à un couple appliqué dans le sens de l'ouverture. Lorsque le couple appliqué est trop important, cette faible rigidité conduit à un décollement des ferrures 12 et 14.

Dans de nombreuses applications, la rigidité médiocre présentée par l'articulation dans le sens de la fermeture est parfaitement tolérable. Toutefois, il existe certaines applications dans lesquelles il est nécessaire d'adjoindre à l'articulation un dispositif complémentaire permettant d'augmenter sa rigidité dans le sens de la fermeture lorsqu'elle est en position déployée.

Dans le mode de réalisation représenté sur les figures 1 à 5 ce dispositif complémentaire est constitué par des organes de liaison souples tels que des câbles métalliques torsadés 46, dont les extrémités sont fixées respectivement sur les ferrures 12 et 14, de façon à être précontraints en tension lorsque l'articulation 10 est en position déployée.

De façon plus précise, l'articulation représentée comprend deux câbles 46 qui sont disposés de part et d'autre des ferrures 12 et 14, au-delà des bandes élastiques 36. Les extrémités de chacun des câbles 46 sont fixées sur un support en forme d'équerre 48, lui-même fixé sur l'une des pièces d'ancrage 38 de la manière représentée en détail sur la figure 4.

La fixation de chacune des extrémités des câbles 46 sur le support 48 correspondant est effectuée au moyen d'un embout fileté 49 vissé dans le support et maintenu en place par un contre écrou 50. La tension de chacun des câbles 46 est réglée en position déployée en vissant l'un des embouts 49 dans un manchon 51 lié à l'extrémité correspondante du câble 46, de façon à écraser des rondelles Belleville 53 contre le support 48. La précontrainte s'applique automatiquement sur le câble à la fin du déploiement de l'articulation.

De préférence, lorsque l'articulation doit être soumise à des gradients de température très importants, comme c'est notamment le cas dans le domaine spatial, la fixation des supports 48 sur les pièces d'ancrage 38 est réalisée de telle sorte que les dilatations qui en résultent soient sans effet sur la précontrainte emmagasinée dans les câbles 46.

Comme l'illustre la figure 4, ce résultat peut être obtenu par un montage particulier des supports 48 sur les pièces d'ancrage 38. Dans ce montage, chacun des supports 48 comporte un pion 48a qui pénètre dans un embrèvement 38a complémentaire formé dans la pièce d'ancrage 38. Une vis de fixation 52 fortement serrée traverse le support 48 et la pièce d'ancrage 38 selon l'axe du pion 48a. Chaque support 48 est également fixé sur la pièce d'ancrage 38 correspondante par une deuxième vis 54, serrée plus faiblement et traversant avec un certain jeu le support 48.

Dans l'agencement ainsi réalisé, les extrémités du câble 46 fixées sur les supports 48 sont séparées par une distance $d_0$, alors que les axes des vis de fixation 52 des supports 48 sur les pièces d'ancrage 38 sont séparés par une distance $d_1$. Par ailleurs, les supports sont réalisés en un matériau tel que de l'Invar (marque déposée) dont le coefficient de dilatation est pratiquement nul.

Par ailleurs, on connaît le coefficient de dilatation $\alpha_1$ du matériau tel qu'un métal ou un alliage métallique dans lequel sont réalisées les pièces d'ancrage 38 et les ferrures 12 et 14, ainsi que le coefficient de dilatation $\alpha_0$ du matériau tel que de l'acier, dans lequel est réalisé le câble 46. Par conséquent, en donnant aux distances $d_0$ et $d_1$ précédemment définies des valeurs telles que $d_0\alpha_0 = d_1\alpha_1$, un tel montage permet de supprimer les dilatations différentielles entre les câbles et les ferrures, de telle sorte que la précontrainte de tension emmagasinée dans les câbles reste inchangée quelle que soit la température.

La disposition des câbles 46 par rapport au plan passant par les axes des surfaces cylindriques 12a et 14a des ferrures lorsque l'articulation est en position déployée est telle que ces câbles soient situés approximativement dans ce plan ou décalés du côté des bandes élastiques 36, par rapport à ce plan. Cette disposition permet de ne mettre en tension les câbles 46 qu'à la fin du déploiement de l'articulation et évite donc que le couple résistant exercé par ces câbles n'empêche le déploiement complet de l'articulation. Cette disposition permet cependant aux câbles 46 d'accroître de façon très sensible la rigidité de l'articulation déployée, notamment dans le sens de la fermeture, et empêche le décollement des ferrures 12 et 14 lorsqu'un couple est appliqué dans ce sens sur l'articulation déployée.

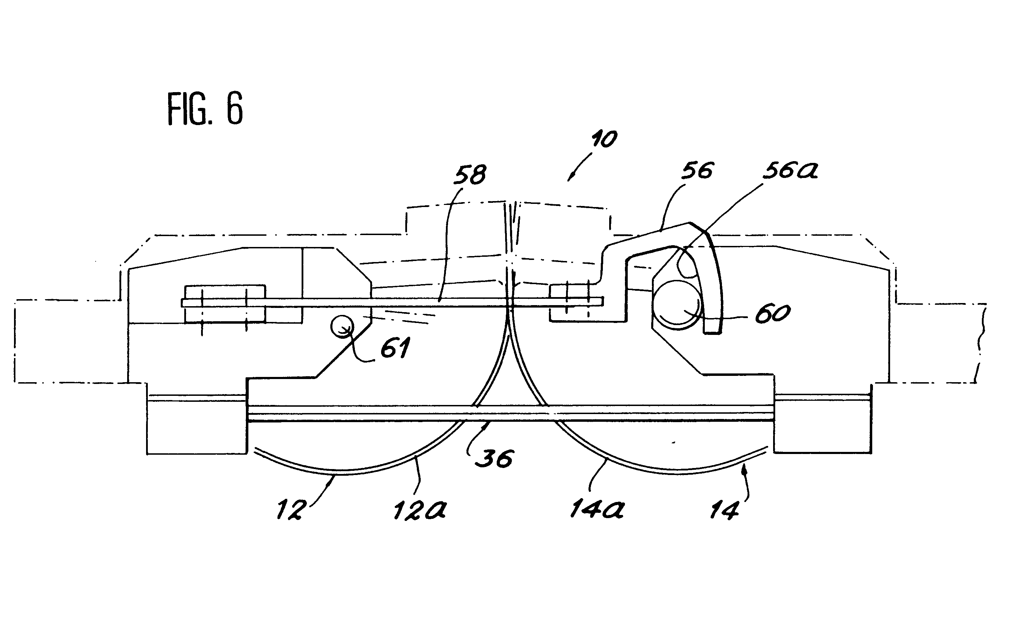

La figure 6 illustre une variante de réalisation dans laquelle la rigidité en position déployée est améliorée non plus par des câbles mais par des organes d'accrochage complémentaires liés à chacune des ferrures et qui viennent s'emboîter l'un dans l'autre à la fin du déploiement de l'articulation. Un ensemble d'organes d'accrochage complémentaires peut ainsi être fixé aux ferrures 12 et 14, de part et d'autre de celles-ci, au-delà des bandes élastiques 36.

De façon plus précise, on voit sur la figure 6 que chaque ensemble d'organes d'accrochage complémentaires comprend un crochet 56 fixé à une extrémité d'une lame de ressort flexible 58 dont l'autre extrémité est fixée sur l'une des ferrures, par exemple la ferrure 12. L'autre organe d'accrochage est constitué par un pion 60, solidaire de l'autre ferrure, par exemple la ferrure 14. Les fixations de la lame de ressort flexible 58 sur la ferrure 12 et du pion 60 sur la ferrure sont réalisées de telle sorte que, lorsque le crochet 56 est engagé sur le pion 60, l'articulation étant en position déployée, la lame 58 et l'axe du pion 60 soient disposés approximativement dans le plan passant par les axes des surfaces cylindriques 12a et 14a des ferrures, comme les câbles 46 dans la première variante de réalisation.

Par ailleurs, l'élasticité de la lame de ressort 58 tend à faire pivoter cette dernière autour de son extrémité fixée sur la ferrure 12, au-delà de la position précitée, dans le sens de l'emboîtement du crochet 56 sur le pion 60, jusqu'à une butée 61 fixée sur la ferrure 12.

De cette manière, à la fin du déploiement de l'articulation, le pion 60 pénètre dans le crochet 56 en venant en contact avec un bord intérieur incliné 56a du bras extérieur du crochet 56. L'inclinaison du bord 56a est déterminée afin que le pion 60 vienne à son contact dans toutes les conditions de températures, malgré les dilatations différentielles qui en résultent. En particulier, l'élasticité de la lame de ressort 58 permet d'emboîter plus profondément le crochet 56 sur le pion 60 lorsque la dilatation différentielle le nécessite.

Au contraire, les matériaux constituant le crochet et le pion sont choisis de telle sorte que, lorsqu'un effort de traction tendant à écarter les ferrures l'une de l'autre est appliqué sur l'articulation déployée, cet effort est repris en totalité par l'appui du pion 60 sur le bord incliné 56a du crochet, sans qu'aucun glissement ne puisse se produire entre ces organes.

Cette deuxième variante de réalisation de l'invention permet donc, comme la précédente, d'assurer la rigidité de l'articulation en position déployée, notamment lorsque cette dernière est soumise à un couple appliqué dans le sens de la fermeture. Cependant, contrairement aux câbles précontraints de la première variante de réalisation, l'ensemble constitué par les lames de ressort 58, les crochets 56 et les pions 60 n'est pas précontraint, de sorte que la rigidité de l'articulation est obtenue sans qu'un décollement éventuel des ferrures soit empêché lorsque cette articulation est soumise à un couple important dans le sens de la fermeture.

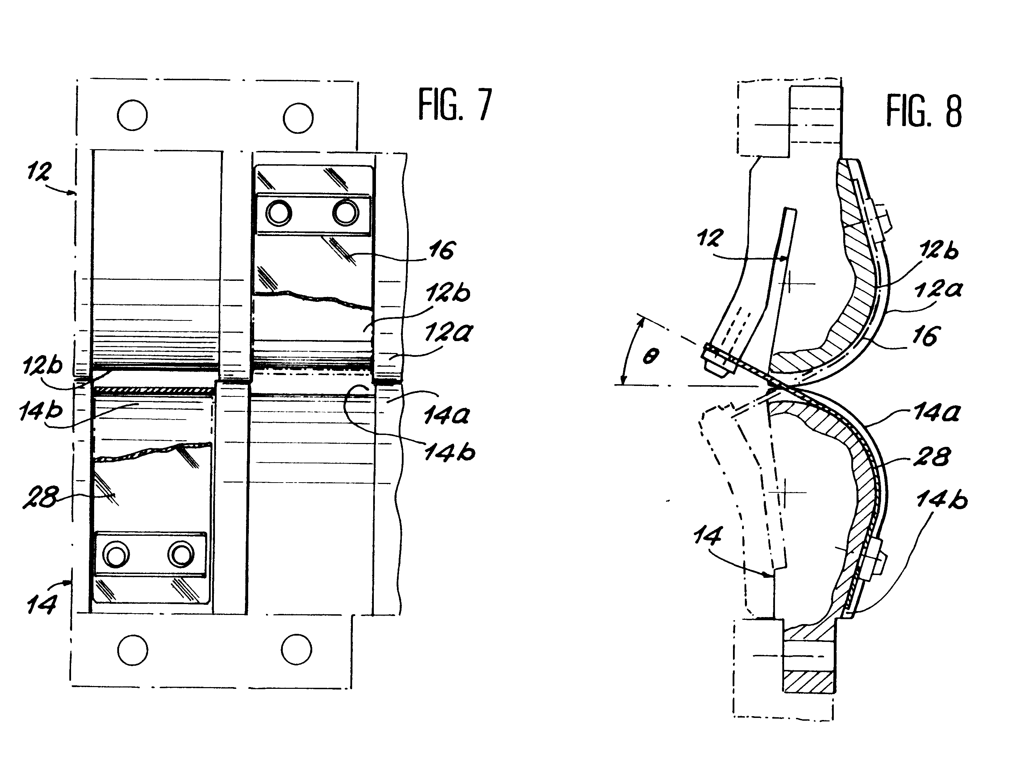

Les deux solutions qui viennent d'être décrites pour améliorer la rigidité de l'articulation 10 lorsqu'elle se trouve en position déployée et lorsqu'elle est soumise à un couple dans le sens de la fermeture nécessitent d'ajouter à l'articulation ce base constituée par les ferrures, les lames d'enroulement et les bandes élastiques des organes supplémentaires. Dans la variante de réalisation représentée sur les figures 7 et 8, un résultat comparable est obtenu sans ajouter aucun organe à l'articulation de base.

Dans cette variante de réalisation, au lieu de s'enrouler directement sur les surfaces extérieures cylindriques 12a et 14a des ferrures, les lames d'enroulement 16 et 38 sont logées dans des gorges 12b et 14b formées sur ces surfaces. De cette manière, au lieu de se croiser dans le plan tangent aux surfaces cylindriques 12a et 14a, les lames d'enroulement 16 et 38 se croisent en faisant avec ce plan tangent commun un angle θ non nul. La valeur de cet angle θ est déterminée par la profondeur des gorges 12b et 14b, qui doit être supérieure à l'épaisseur des lames 16 et 38.

Compte tenu de l'existence de cet angle θ, la précontrainte de tension appliquée sur chacune des lames 16 et 38 crée, au point de contact entre les surfaces 12a et 14a des ferrures, une composante perpendiculaire à ces surfaces et tendant à appliquer les ferrures l'une contre l'autre. Par conséquent, il est possible en donnant à cet angle θ une valeur appropriée d'accroître la rigidité de l'articulation en position déployée. En effet, on oppose alors à un couple de fermeture maximum donné que doit pouvoir supporter l'articulation une force de plaquage des ferrures l'une contre l'autre équilibrant au moins ce couple.

A titre d'exemple nullement limitatif, l'angle θ peut avoir une valeur voisine de 15° dans le cas d'une articulation comportant quatre lames d'enroulement, devant résister à un couple de 8 Nm, lorsque les bandes élastiques 36 sont espacées d'environ 15 mm du plan passant par les centres des surfaces cylindriques 12a et 14a des ferrures. Pour des surfaces cylindriques ayant un rayon de 22 mm, cet angle θ correspond à des gorges 12b et 14b dont la profondeur est d'environ 0,9 mm.

Dans cette variante de réalisation illustrée par les figures 7 et 8, au lieu de se faire par l'intermédiaire des lames d'enroulement 16 et 28, le contact entre les ferrures s'effectue directement par les surfaces cylindriques 12a et 14a, de part et d'autre des gorges 12b et 14b. Pour assurer une reprise correcte des efforts entre les ferrures, une légère augmentation de l'écartement entre les lames d'enroulement est donc nécessaire.

L'articulation sans frottement conforme à l'invention, dont trois variantes de réalisation viennent d'être décrites successivement en se référant aux figures 1 à 8, présente des caractéristiques de fiabilité, de rigidité et de tenue mécanique qui permettent, si nécessaire, d'articuler l'un sur l'autre deux éléments voisins au moyen d'une articulation unique de ce type. Cela permet de simplifier l'assemblage puisque la présence de plusieurs articulations entre deux éléments voisins pose des problèmes d'alignement qui sont parfois difficiles à résoudre compte tenu des tolérances de fabrication.

Un autre avantage essentiel de l'articulation selon l'invention, déjà mentionné précédemment, concerne le fait que la qualité du guidage assuré par les lames d'enroulement précontraintes, lors du roulement des ferrures l'une sur l'autre commandé par les bandes élastiques, ainsi que l'absence de frottement de l'articulation, permettent de modéliser de façon très précise le comportement de l'articulation lors de son déploiement. Il n'est donc généralement pas nécessaire d'en réguler la vitesse de déploiement, ni d'équiper un ensemble articulé constitué de plusieurs éléments successifs reliés par de telles articulations d'un mécanisme de synchronisation complémentaire.

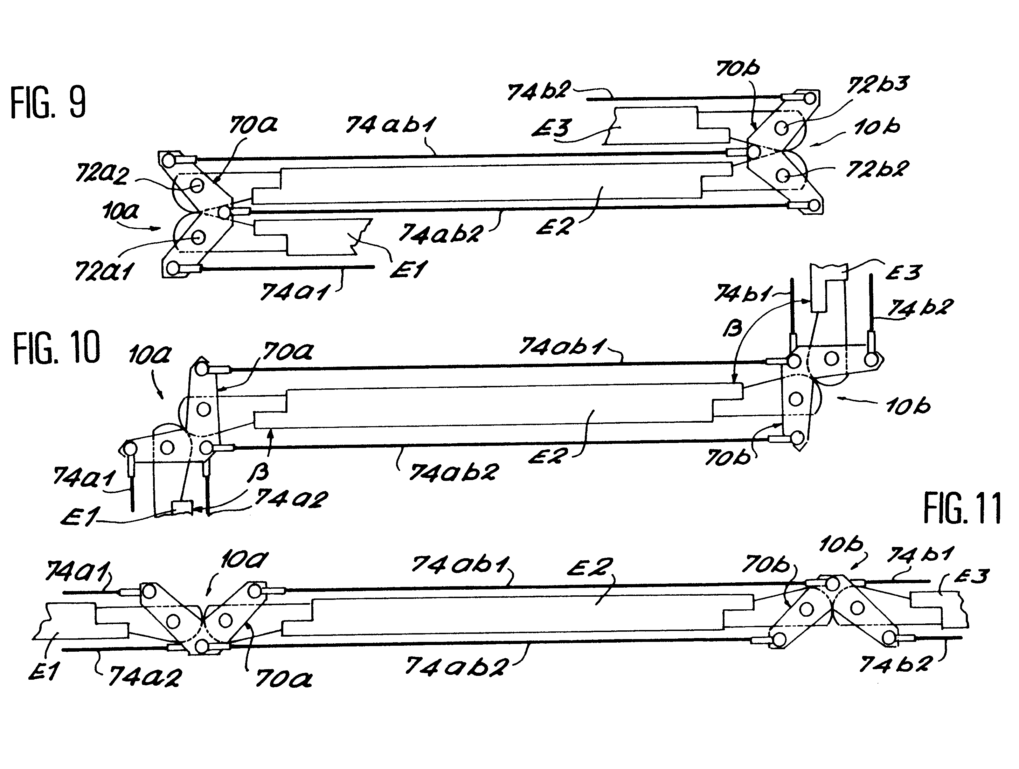

Dans certaines applications, il peut toutefois s'avérer utile d'équiper un tel ensemble articulé d'un mécanisme de synchronisation. Dans ce cas, on utilisera de préférence un mécanisme tel que celui qui est illustré schématiquement sur les figures 9 à 11.

Sur ces figures, on a représenté trois éléments articulés successifs E1, E2 et E3 articulés entre eux deux à deux par l'intermédiaire d'articulations 10a et 10b conformes à l'invention. Ces éléments articulés, dont le nombre peut éventuellement être supérieur à trois, peuvent notamment être des éléments d'un panneau solaire de satellite.

Comme l'illustre la figure 9, le mécanisme de synchronisation équipant l'ensemble articulé comprend tout d'abord un support 70a, 70b associé à chacune des articulations 10a et 10b. Chacun de ces supports présente approximativement la forme d'un V dont le sommet est tourné vers l'intérieur de l'articulation correspondante.

Les branches du V formé par chacun des supports 70a, 70b sont articulées en leur milieu sur les panneaux E1, E2 et E2, E3 reliés par les articulations 10a, 10b correspondantes. Ainsi, les branches du support 70a sont articulées respectivement sur les panneaux E1 et E2 par des axes 72a1 et 72a2 et les branches du support 70b sont articulées sur les panneaux E2 et E3 par des axes 72b2 et 72b3. De façon plus précise, les axes 72a1 et 72a2 sont confondus respectivement avec les axes des surfaces cylindriques des ferrures de l'articulation 10a liées respectivement à l'élément E1 et à l'élément E2. De façon comparable, les axes 72b2 et 72b3 sont confondus avec les axes des surfaces cylindriques des ferrures de l'articulation 10b liées respectivement aux éléments E2 et E3. Dans la pratique, au lieu d'être articulés sur les éléments E1, E2 et E3, les supports 70a et 70b peuvent être articulés directement sur les ferrures des articulations reliant ces éléments.

Le mécanisme de déploiement synchronisé illustré par les figures 9 à 11 comprend de plus des organes de traction tels que des câbles ou des bielles reliant les supports 70a et 70b articulés sur un même élément tel que l'élément E2 sur les figures.

Ainsi, en considérant l'élément E2, deux organes de traction 74ab1 et 74ab2 sont articulés par leurs deux extrémités respectivement sur les branches des supports 70a et 70b articulées sur cet élément E2, de part et d'autre des axes 72a2 et 72b2 et à égale distance de ces derniers, de façon à former un parallélogramme déformable avec lesdites branches des supports. Des organes de traction comparables et agencés de la même manière sont associés aux autres éléments tels que E1 et E3 du panneau. Ces organes de traction sont désignés respectivement par les références 74a1 et 74a2 pour l'élément E1 et 74b1 et 74b2 pour l'élément E3.

Grâce à cet agencement et comme l'illustrent à différentes étapes du déploiement les figures 9, 10 et 11, le déploiement des différents éléments constituant l'ensemble articulé s'effectue de façon parfaitement synchronisée.

Ainsi, dans la position initiale illustrée par la figure 9, dans laquelle les éléments E1, E2 et E3 sont parallèles entre eux et repliés l'un contre l'autre, les organes de traction 74 sont également tous parallèles à ces éléments et les supports 70a et 70b sont disposés de façon symétrique par rapport aux plans tangents aux points de contact entre les surfaces cylindriques des ferrures des articulations 10a et 10b correspondantes.

Lorsque le dispositif (non représenté) verrouillant l'ensemble articulé dans sa position repliée est libéré, le couple moteur emmagasiné dans les bandes élastiques des articulations assure automatiquement le déploiement des différents éléments tels que E1, E2 et E3. Toutefois, en raison de la présence des parallélogrammes déformables formés par les organes de traction 74 et par les supports 70, pour toute valeur β de l'angle de déploiement de l'une quelconque des articulations, telles que l'articulation 10a, l'angle de déploiement des autres articulations telles que l'articulation 10b sur la figure 10 a cette même valeur β.

Le déploiement complet des différents éléments de l'ensemble articulé, illustré sur la figure 11, est ainsi obtenu simultanément pour chacune des articulations telles que 10a et 10b de cet ensemble.

Bien entendu, l'invention n'est pas limitée aux différentes variantes de réalisation décrites précédemment à titre d'exemples.

Ainsi, le nombre des lames d'enroulement peut être différent de quatre, à condition qu'il existe au moins une lame d'enroulement analogue aux lames 16 et 28. De même, les moyens pour exercer sur ces lames une précontrainte de traction peuvent être différents des moyens décrits. En particulier, ces lames d'enroulement peuvent être remplacées par des organes souples et non extensibles tels que des câbles sur lesquels la précontrainte peut être appliquée au moyen de rondelles Belleville comprimées.

Le nombre des bandes élastiques peut également être différent de deux, lorsque les couples moteur et de déverrouillage que l'on désire obtenir le justifient. En outre, bien que chacune des bandes élastiques soit de préférence constituée de deux lames superposées comme cela a été décrit, un nombre de lames supérieur ou inférieur à deux peut éventuellement être employé.

De plus, il est également rappelé que l'utilisation de moyens tels que des câbles précontraints, des crochets ou des gorges pour augmenter la rigidité de l'articulation est facultative. Il en est de même du mécanisme de déploiement synchronisé décrit en se référant aux figures 9 à 11.

Enfin, les supports 48 des organes de liaison 46 peuvent être réalisés en un matériau présentant un coefficient de dilatation $\alpha2$ non nul. Les distances do et d1 doivent alors être choisies afin de satisfaire la relation : $do\,\alpha\,o = d1\,\alpha1 + (do-d1)\alpha2$.

**Revendications**

1. Articulation (10) sans frottement, conçue pour être montée entre deux éléments (E1,E2) voisins, comprenant au moins une bande élastique préformée (36), à section en arc de cercle, solidaire de chacun des éléments (E1,E2) par ses deux extrémités, cette articulation (10) étant caractérisée par le fait qu'elle comprend deux ferrures (14,12) aptes à être solidarisées de chacun des éléments (E1,E2) et sur lesquelles sont fixées les extrémités de chaque bande élastique (36), lesdites ferrures (14,12) comportant des surfaces cylindriques convexes (14a,12a) aptes à rouler l'une sur l'autre, sous l'action d'au moins deux organes souples (16,28), les extrémités de chacun de ces organes (16,28) étant fixées respectivement sur chacune des ferrures (12,14), de telle sorte que ces organes passent en se croisant entre lesdites surfaces cylindriques, un moyen de mise en tension (22,34) étant prévu pour exercer une précontrainte de traction sur chacun desdits organes (16,28).

2. Articulation selon la revendication 1, caractérisée par le fait que chaque bande élastique (36) comprend deux lames élastiques superposées (40) solidarisées en leur milieu par un moyen de liaison mécanique (44).

3. Articulation selon l'une quelconque des revendications 1 et 2, caractérisée par le fait que chaque bande élastique (36) est disposée à une distance (d) non nulle d'un plan passant par les axes des surfaces cylindriques (12a,14a), parallèlement à ce plan et du côté tourné vers l'intérieur de l'articulation.

4. Articulation selon l'une quelconque des revendications 1 à 3, caractérisée par le fait que chaque bande élastique (36) est revêtue d'une enveloppe de protection (42) thermiquement isolante.

5. Articulation selon l'une quelconque des revendications 1 à 4, caractérisée par le fait que chaque organe souple est une lame d'enroulement (16,28).

6. Articulation selon l'une quelconque des revendications 1 à 5, caractérisée par le fait que ledit moyen de mise en tension comprend une poutre fléchissante (22,34) dont une extrémité est solidaire de l'une des ferrures (12,14) et sur l'extrémité opposée de laquelle est fixée une extrémité dudit organe (16,28).

7. Articulation selon la revendication 6, caractérisée par le fait qu'une cale (25,35) est interposée entre l'extrémité de la poutre (22,34) sur laquelle est fixé ledit organe (16,28) et une face voisine de la ferrure (12,14) portant cette poutre.

8. Articulation selon l'une quelconque des revendications 1 à 7, caractérisée par le fait qu'elle comprend quatre organes souples comportant deux organes centraux adajacents (16) enroulés dans un même premier sens sur lesdites surfaces cylindriques (12a,14a) et deux organes extérieurs (28) adjacents aux organes centraux et enroulés dans un même deuxième sens opposé au premier, sur lesdites surfaces cylindriques.

9. Articulation selon l'une quelconque des revendications 1 à 8, caractérisée par le fait que chaque ferrure (12,14) comporte deux faces latérales opposées sur au moins l'une desquelles est fixée l'extrémité d'au moins une bande élastique (36), par l'intermédiaire d'une pièce d'ancrage (38).

10. Articulation selon la revendication 9, caractérisée par le fait que les pièces d'ancrage (38) sont montées sur les ferrures (12,14) par des moyens de fixation démontables (41).

11. Articulation selon l'une quelconque des revendications 1 à 10, caractérisée par le fait qu'elle comprend de plus au moins un organe de liaison (46), dont les extrémités sont fixées respectivement sur chacune des ferrures (12,14), cet organe de liaison étant mis en tension à proximité immédiate d'une position ouverte de l'articulation, de façon à exercer un effort tendant à appliquer lesdites surfaces cylindriques (12a,14a) l'une sur l'autre, dans cette position ouverte.

12. Articulation selon la revendication 11, combinée avec l'une quelconque des revendications 9 et 10, caractérisée par le fait qu'elle comprend deux organes de liaison (46), les extrémités de chacun de ces organes de liaison étant fixées par un support (48) sur chacune des pièces d'ancrage (38).

13. Articulation selon l'une quelconque des revendications 11 et 12, caractérisée par le fait que les supports (48) comportent des zones de fixation (48a) sur les pièces d'ancrage (38) présentant entre elles une distance d1 à laquelle correspond une distance do entre les extrémités de l'organe de liaison (46) fixé sur ces supports, dans la position ouverte de l'articulation, ces distances d1 et do étant telles que do $\alpha$o = d1 $\alpha$ 1 + (do-d1) 2, où $\alpha$o, $\alpha$1, et $\alpha$2 désignent respectivement les coefficients de dilatation des matériaux constituant l'organe de liaison (46) ; les pièces d'ancrage (38) et les ferrures (12,14) ; et les supports (48).

14. Articulation selon l'une quelconque des revendications 11 à 13, caractérisée en ce que chaque organe de liaison est un câble (46).

15. Articulation selon l'une quelconque des revendications 11 à 14, caractérisée en ce que chaque organe de liaison (46) est disposé approximativement dans un plan passant par les axes des surfaces cylindriques (12a,12b), lorsque l'articulation est déployée.

16. Articulation selon l'une quelconque des revendications 11 à 15, caractérisée par le fait que chaque organe de liaison (46) est précontraint lorsque l'articulation est en position ouverte.

17. Articulation selon l'une quelconque des revendications 1 à 10, caractérisée par le fait qu'elle comprend de plus des organes d'accrochage complémentaires (56,60) fixés respectivement sur chacune des ferrures (12,14), de telle sorte que ces organes viennent s'emboîter l'un dans l'autre à proximité d'une position ouverte de l'articulation, de façon à s'opposer à un écartement des ferrures dans cette position.

18. Articulation selon la revendication 17, caractérisée par le fait que les organes d'accrochage complémentaires comprennent un crochet (56) relié à l'une des ferrures (12) par une lame de ressort (58) approximativement contenue un plan joignant les axes des surfaces cylindriques, et un pion (60) solidaire de l'autre ferrure (14) et apte à pénétrer dans le crochet (56) pour venir en appui sur un bord incliné (56a) de ce crochet, dans la position ouverte de l'articulation.

19. Articulation selon l'une quelconque des revendications 1 à 10, caractérisée par le fait que chaque organe souple (16,28) est monté dans des gorges (12b,14b) formées dans lesdites surfaces cylindriques (12a,14a) et de profondeur supérieure à l'épaisseur dudit organe, de telle sorte que les surfaces cylindriques soient directement en contact entre elles de part et d'autre desdites gorges.

20. Ensemble articulé formé d'au moins trois éléments voisins (E1,E2,E3) articulés deux à deux par au moins une articulation (10) selon l'une quelconque des revendications 1 à 19, caractérisé par le fait qu'il comprend de plus un mécanisme de déploiement synchronisé comportant, entre chaque paire d'éléments voisins, un support (70a,70b) articulé sur ces éléments par des axes (72) confondus avec les axes des surfaces cylindriques de l'articulation reliant ces éléments et, pour chaque élément, une paire d'organes de traction (74) articulés sur les supports (70a,70b) de part et d'autre de leurs axes d'articulation sur cet élément, de façon à former des parallélogrammes déformables avec ces supports.

21. Ensemble articulé selon la revendication 20, caractérisé par le fait que les supports (70a,70b) comportent deux branches à angle droit, ouvertes vers l'extérieur des articulations correspondantes.

22. Ensemble articulé selon l'une quelconque des revendications 20 et 21, caractérisé par le fait que les organes de traction (74) sont des câbles.

23. Ensemble articulé selon l'une quelconque des revendications 20 et 21, caractérisé par le fait que les organes de traction (74) sont des bielles.

**Patentansprüche**

1. Reibungsfreies Gelenk (10), das zur Montage zwischen zwei benachbarten Elemente (E1, E2) vorgesehen ist und das wenigstens ein vorgeformtes, elastisches Band (36) mit einem Querschnitt in Kreisbogenform umfaßt, das mit jedem der Elemente (E1, E2) an seinen beiden Enden verbunden ist, wobei dieses Gelenk (10) gekennzeichnet ist durch die Tatsache, daß es zwei Beschläge (14, 12) aufweist, die geeignet sind, mit jedem der Elemente (E1, E2) verbunden zu werden, und auf denen die Enden jedes elastischen Bands (36) befestigt sind, wobei die Beschläge (14, 12) konvexe, zylinderförmige Oberflächen (14a, 12a) aufweisen, die geeignet sind, unter der Wirkung von wenigstens zwei elastischen Elementen (16, 28) aufeinander zu rollen, wobei die Enden jedes dieser Elemente (16, 28) jeweils auf einem der Beschläge (12, 24) derart befestigt sind, daß diese Elemente vorbeigehen, indem sie sich zwischen den zylinderförmigen Oberflächen kreuzen, wobei eine Vorrichtung (22, 34) zum In-Spannung-Versetzen vorgesehen ist, um eine Zugvorspannung auf jedes dieser Elemente (16, 28) auszuüben.

2. Gelenk nach Anspruch 1, gekennzeichnet durch die Tatsache, daß jedes elastische Band (36) zwei übereinanderliegende, elastische Lamellen (40) besitzt, die in ihrer Mitte mit einer mechanischen Verbindungsvorrichtung (44) verbunden sind.

3. Gelenk nach einem der Ansprüche 1 und 2, gekennzeichnet durch die Tatsache, daß jedes elastische Band (36) in einem nicht verschwindenden Abstand (d) von einer durch die Achsen der zylindrischen Oberflächen (12a, 14a) entfernten Ebene parallel zu dieser Ebene und auf der zum Inneren des Gelenks gewandten Seite angeordnet ist.

4. Gelenk nach einem der Ansprüche 1 bis 3, gekennzeichnet durch die Tatsache, daß jedes elastische Band (36) mit einer thermisch isolierenden Schutzhülle (42) überzogen ist.

5. Gelenk nach einem der Ansprüche 1 bis 4, gekennzeichnet durch die Tatsache, daß jedes elastische Element eine aufgerollte Lamelle (16, 28) ist.

6. Gelenk nach einem der Ansprüche 1 bis 5, gekennzeichnet durch die Tatsache, daß die Vorrichtung zum In-Spannung-Versetzen einen sich biegenden Träger (22, 34) umfaßt, von dem ein Ende mit einem der Beschläge (12, 14) verbunden ist und auf dessen gegenüberliegendem Ende ein Ende des Elements (16, 28) befestigt ist.

7. Gelenk nach Anspruch 6, gekennzeichnet durch die Tatsache, daß ein Keil (25, 35) zwischen dem Ende des Trägers (22, 34), auf dem das Element (16, 28) befestigt ist und einer benachbarten Fläche des diesen Träger tragenden Beschlags (12, 14) angeordnet ist.

8. Gelenk nach einem der Ansprüche 1 bis 7, gekennzeichnet durch die Tatsache, daß es vier elastische Elemente umfaßt mit zwei zentralen, benachbarten Elementen (16), die im gleichen Sinne auf den zylindrischen Oberflächen (12a, 14a) aufgerollt sind, und mit zwei äußeren, den zentralen Elementen benachbarten Elementen (18), die in einem zweiten gleichen, dem ersten entgegengesetzten Sinn auf denselben zylindrischen Oberflächen aufgerollt sind.

9. Gelenk nach einem der Ansprüche 1 bis 8, gekennzeichnet durch die Tatsache, daß jeder Beschlag (12, 14) zwei seitliche, gegenüberliegende Flächen umfaßt, wobei auf wenigstens einer derselben das Ende von wenigstens einem elastischen Band (36) mittels eines Verankerungsstücks (38) befestigt ist.

10. Gelenk nach Anspruche 9, gekennzeichnet durch die Tatsache, daß die Verankerungsstücke (38) auf den Beschlägen (12, 14) mittels demontierbaren Befestigungselementen (41) befestigt sind.

11. Gelenk nach einem der Ansprüche 1 bis 10, gekennzeichnet durch die Tatsache, daß es außerdem wenigstens ein Verbindungselement (46) umfaßt, dessen Enden jeweils auf jedem der Beschläge (12, 14) montiert sind, wobei dieses Verbindungselement in unmittelbarer nachbarschaft zu einer geöffneten Stellung des Gelenks in Spannung versetzt wird, um ein kraft auszuüben, die dazu neigt, die zylindrischen Oberflächen (12a, 14a) in dieser geöffneten Stellung gegeneinander zu drücken.

12. Gelenk nach Anspruch 11 kombiniert mit einem der Ansprüche 9 bis 10, gekennzeichnet durch die Tatsache, daß es zwei Verbindungselemente (46) umfaßt, wobei die Enden jedes dieser Verbindungselemente mit einer Halterung (48) auf jedem der Verankerungstücke (38) montiert sind.

13. Gelenk nach einem der Ansprüche 11 und 12, gekennzeichnet durch die Tatsache, daß die Halterungen (48) Befestigungsbereiche (48a) auf den Verankerungstücken (38) aufweisen, die zwischen sich einen bestand d1 aufweisen, dem ein bestand do zwischen den Enden der auf diesen Halterungen montierten Verbindungselemente (46) in der geöffneten Position des Gelenks entspricht, wobei diese bestände d1 und do derart sind, daß $do \alpha o = d1 \alpha 1 + (do-d1) \alpha 2$, wobei $\alpha o$, $\alpha 1$ und $\alpha 2$ jeweils die Ausdehnungskoeffizienten der das Befestigungselement (46), die Verankerungsstücke (38) und Beschläge (12, 14) und die Halterungen (48) bildenden Materialien angeben.

14. Gelenk nach einem der Ansprüche 11 bis 13, gekennzeichnet durch die Tatsache, daß jedes Verbindungselement (46) ein Kabel ist.

15. Gelenk nach einem der Ansprüche 11 bis 14, gekennzeichnet durch die Tatsache, daß jedes Verbindungselement ungefähr in einer durch die Achsen der zylindrischen Oberflächen (12a, 14a) gehenden Ebene geht, wenn das Gelenk ausgebreitet ist.

16. Gelenk nach einem der Ansprüche 11 bis 15, gekennzeichnet durch die Tatsache, daß jedes Verbindungselement (46) vorgespannt ist, wenn das Gelenk in der geöffneten Stellung ist.

17. Gelenk nach einem der Ansprüche 1 bis 10, gekennzeichnet durch die Tatsache, daß es außerdem komplementäre Verankerungselemente (56, 60) umfaßt, die jeweils auf jedem der Beschlage (12, 14) derart befestigt sind, daß diese Elemente in der Nähe einer geöffneten Stellung des Gelenks so ineinanderfassen, daß sie einem Spalt zwischen den Beschlägen in dieser Stellung gegenüber liegen.

18. Gelenk nach Anspruch 17, gekennzeichnet durch die Tatsache, daß die komplementären Verankerungselemente einen Haken (56), der mit einer Federlamelle (58), die in einer Ebene, die die Achsen der zylindrischen Oberflächen verbindet, ungefähr stetig ist, an einem der Beschläge (12) befestigt ist, und eine Kugel (60) umfassen, die mit dem anderen Beschlag (14) verbunden ist und sich in der geöffneten Stellung des Gelenks auf einen geneigten Rand (56a) dieses Hakens stützt.

19. Gelenk nach einem der Ansprüche 1 bis 10, gekennzeichnet durch die Tatsache, daß das elastische Element (16, 28) in Spalten (12b, 14b) montiert ist, die von den zylindrischen Oberflächen (12a, 14a) gebildet werden und von einer Tiefe größer als die Breite des Elements sind, so daß die zylindrischen Oberflächen direkt untereinander auf der einen und der anderen Seite der Spalten in Kontakt stehen.

20. Gelenkanordnung, die aus wenigstens drei benachbarten Elementen (E1, E2, E3) besteht, die paarweise mit wenigstens einem Gelenk (10) nach einem der Ansprüche 1 bis 19 gelenkig miteinander verbunden sind, gekennzeichnet durch die Tatsache, daß sie außerdem einen Mechanismus zum synchronen Ausbreiten aufweist, der zwischen jedem Paar benachbarter Elemente eine Halterung (70a, 70b), die mittels Achsen (72), die mit den Achsen der zylindrischen Oberflächen des diese Elemente verbindenden Gelenks zusammenfallen, gelenkig auf diesen Elementen befestigt sind, und für jedes Element ein Paar von Zugorganen (74) umfaßt, die gelenkig mit den Halterungen (70a, 70b) auf der einen und der anderen Seite ihrer Gelenkachsen auf diesem Element verbunden sind, so daß sie mit diesen Halterungen verformbare Parallelogramme bilden.

21. Gelenkanordnung nach Anspruch 20, gekennzeichnet durch die Tatsache, daß die Halterungen (70a, 70b) zwei rechtwinklige Zweige aufweisen, die zur Außenseite der entsprechenden Gelenke geöffnet sind.

22. Gelenkanordnung nach einem der Ansprüche 20 und 21, gekennzeichnet durch die Tatsache, daß die Zugorgane (74) Kabel sind.

23. Gelenkanordnung nach einem der Ansprüche 20 und 21, gekennzeichnet durch die Tatsache, daß die Zugorgane (74) Kuppelstangen sind.

**Claims**

1. Antifriction joint (10) designed to be mounted between two adjacent elements (E1,E2) and comprising at least one preformed elastic band (30) with an arc of a circle section integral with each of the elements (E1,E2) via its two extremities, said joint (10) being characterized in that it comprises two braces (14,12) suitable for being rendered integral with each of the elements (E1,E2) and on which secured are the extremities of each elastic band (36), said braces (14.12) comprising convex cylindrical surfaces (14a,12a) suitable for rolling onto each other under the action of at least two flexible members (16,28), the extremities of each of these members (16,28) being respectively secured to each of the braces (12,14) so that these members pass by crossing between said cylindrical surfaces, a tensioning device (22,34) being provided for exerting a tractive prestressing on each of said members (16,28).

2. Joint according to claim 1, characterized in that each elastic band (36) includes two superimposed spring rods (40) rendered integral at their middle by a mechanical linking device (44).

3. Joint according to either of the claims 1 and 2, characterized in that each elastic band (36) is disposed at a positive distance (d) from a plane passing through the axes of the cylindrical surfaces (12a,14a) parallel to this plane and from the side orientated towards the inside of the joint.

4. Joint according to any one of the claims 1 to 3, characterized in that each elastic band (36) is covered with a thermally insulating protection casing (42).

5. Joint according to any one of the claims 1 to 4, characterized in that each flexible member is a winding place (16,28).

6. Joint according to any one of the claims 1 to 5, characterized in that said tensioning device includes a bending beam (22,34), one of whose extremities is integral with one of the braces (12,14) and on the opposite brace extremity secured is one extremity of said member (16,28).

7. Joint according to claim 6, characterized in that a shim (25,35) is inserted between the extremity of the beam (22,34) to which said device (16,28) is secured and an adjacent face of the brace (12,14) bearing this beam.

8. Joint according to any one of the claims 1 to 7, characterized in that said joint includes four flexible devices comprising two adjacent central devices (16) wound in a given first direction on said cylindrical surfaces (12a,14a) and two outer devices (28) adjacent to the central devices and wound in a given second direction opposite the dirst direction on said cylindrical surfaces.

9. Joint according to any one of the claims 1 to 8, characterized in that each brace (12,14) comprises two opposing lateral faces, the extremity of at least one elastic band (36) being secured to at least one of said faces by means of an anchorage part (38).

10. Joint according to claim 9, characterized in that the anchorage parts (38) are mounted on the braces (12,14) by detachable fixing means (41).

11. Joint according to any one of the claims 1 to 10, characterized in that said joint also includes at least one linking member (46) whose extremities are respectively secured to each of the braces (12,14), this linking member being tensioned immediately close to an open position of the joint so as to exert a force tending to apply said cylindrical surfaces (12a,14a) onto each other in this open position.

12. Joint according to claim 11, combined with either of the claims 9 and 10, characterized in that said joint includes two linking members (46), the extremities of each of these linking members being secured via a support (48) to each of the anchorage parts (38).

13. Joint according to either of the claims 10 and 11, characterized in that the supports (48) comprise fixing zones (48a) on the anchorage parts (38) having between them a distance d1 corresponding to a distance do between the extremities of the linking member (46) secured to these supports in the open position of the joint, these distances d1 and do being such that do $\alpha$ o = d1 $\alpha$ 1 + (do-d1) $\alpha$ 2, where $\alpha$o, $\alpha$1 and $\alpha$2 respectively denote the expansion coefficients of the materials constituting the linking member (46), the anchorage parts (38), the braces (12,14) and the supports (48).

14. Joint according to any one of the claims 11 to 13, characterized in that each linking member is a cable (46).

15. Joint according to any one of the claims 11 to 14, characterized in that each linking member (46) is disposed roughly within a plane passing through the axes of the cylindrical surfaces (12a,12b) when the joint is deployed.

16. Joint according to any one of the claims 11 to 15, characterized in that each linking member (46) is prestressed when the joint is in the open position.

17. Joint according to any one of the claims 1 to 10, characterized in that said joint moreover includes additional hooking members (56,60) respectively secured to each of the braces (12,14) so that these members are fitted together close to an open position of the joint so as to be opposite a spacing of the braces in this position.

18. Joint according to claim 17, characterized in that the additional hooking members include a hook (56) connected to one of the braces (12) by a spring rod (58) approximately contained within a plane joining the axes of the cylindrical surfaces, and a slug (60) integral with the other brace (14) and suitable for penetrating the hook (56) so as to take support on a slanted edge (56a) of this hook in the open position of the joint.

19. Joint according to any one of the claims 1 to 10, characterized in that each flexible member (16,28) is mounted in throats (12b,14b) formed in said cylindrical surfaces (12a,14a) whose depth is more than the thickness of said member, so that the cylindrical surfaces are directly in contact with each other on both sides of said throats

20. Articulated assembly formed of at least three adjacent elements (E1,E2,E3) joined two-by-two by at least one joint (10), according to any one of the claims 1 to 19, characterized in that it also comprises a synchronized deployment mechanism comprising between each pair of adjacent elements, a support (70,70b) joined onto these elements through spindles (72) merged with the axes of the cylindrical surfaces of the joint connecting these elements and, for each element, a pair of traction members (74) joined onto the supports (70a,70b) on both sides of their hinge pins on this element so as to form deformable parallelograms with these supports.

21. Articulated assembly according to claim 20, characterized in that the supports (70a,70b) comprise two right-angled branches open to the outside of the corresponding joints.

22. Articulated assembly according to any one of the claims 20 and 21, characterized in that the traction members (74) are cables.

23. Articulated assembly according to any one of the claims 20 and 21, characterized in that the traction members (74) are rods.

FIG.1

# FIG. 2

FIG. 3 a

FIG. 3b

FIG. 3c

FIG. 4

FIG. 5

EP 0 354 837 B1

FIG. 6

FIG. 7

12

16

12b

12a

12b

14b

28

14

14a

14b

FIG. 8

12

12b

12a

16

14a

28

14b

14

θ

EP 0 354 837 B1

FIG. 9

74b2  70b  72b3
74ab1  E3  10b
70a  72b2
72a2
10a  E2
72a1  74ab2
74a1  E1

FIG. 10

74ab1  74b1  E3
B  74b2
10a  70a
10b
B  E2  70b
74a1  74ab2
E1  74a2

FIG. 11

74a1  10a  74ab1  E2  70b  10b  74b1
E3
E1  74a2  70a  74ab2  74b2

EP 0 354 837 B1